# EUROPÄISCHE PATENTSCHRIFT

(11) **EP 4 110 678 B1**
(45) Veröffentlichungstag und Bekanntmachung des Hinweises auf die Patenterteilung: **15.01.2025**
(21) Anmeldenummer: 20829313.4
(22) Anmeldetag: 04.11.2020
(51) Int. Cl.: B62D 1/181, B62D 1/183

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 27.02.2020 DE 102020202536
(43) Veröffentlichungstag der Anmeldung: 04.01.2023
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (DE); WILLI, Andreas, 6923 Lauterach (AT)
(74) Vertreter: thyssenkrupp Intellectual Property GmbH
(86) Internationale Anmeldenummer: PCT/EP2020/000186
(87) Internationale Veröffentlichungsnummer: WO 2021/170199

(56) Entgegenhaltungen:
- DE-A1- 10 144 476
- DE-A1- 102004 044 472
- US-A1- 2016 375 927

## Beschreibung

### Stand der Technik

Die vorliegende Erfindung betrifft eine Lenksäule für ein Kraftfahrzeug zum Ver- und Entstauen, umfassend eine Stelleinheit, in der eine Lenkspindel drehbar gelagert ist und die von einer Trageinheit verstellbar gehalten ist, eine Verstelleinrichtung zum Verstellen der Stelleinheit gegenüber der Trageinheit sowie eine Positionserfassungseinrichtung, die eine erste Sensoreinheit zur Erfassung der Position der Stelleinheit gegenüber der Trageinheit umfasst. Des Weiteren betrifft die vorliegende Erfindung ein Verfahren zum Verstellen einer Lenksäule sowie ein Verfahren zur Ansteuerung von Teilsystemen eines Kraftfahrzeugs.

Das Verstellen der Stelleinheit ist im Sinne von Bewegen bzw. Verlagern der Stelleinheit zu verstehen. Das Verstellen der Stelleinheit entspricht dem Verstellen der Position der Lenkspindel entlang der Verstellrichtung der Verstelleinrichtung. Die Stelleinheit ist von der Trageinheit verstellbar gehalten. Mit anderen Worten: Die Stelleinheit ist an der Trageinheit verstellbar angeordnet.

Lenksäulen für Kraftfahrzeuge weisen eine Lenkspindel auf, an deren in Fahrtrichtung hinteren, dem Fahrer zugewandten Ende ein Lenkrad zur Einbringung eines Lenkbefehls durch den Fahrer angeordnet ist. Dieses Ende wird als lenkradseitiges Ende der Lenkspindel bezeichnet. Die Lenkspindel ist um ihre Längsachse in einer Manteleinheit oder in einer in der Manteleinheit aufgenommenen Stelleinheit drehbar gelagert, wobei die Manteleinheit von einer Trageinheit getragen ist, die an der Fahrzeugkarosserie anbringbar ist. Dadurch, dass die Stelleinheit in einer mit der Trageinheit verbundenen Manteleinheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit verschwenkbar an der Trageinheit gelagert ist. Die Verstellung der Stelleinheit in Längs- bzw. Höhenverstellrichtung ermöglicht die Einstellung einer ergonomisch optimalen Lenkradposition relativ zur Fahrerposition in Betriebsstellung, auch als Fahr- oder Bedienposition bezeichnet, in der ein manueller Lenkeingriff erfolgen kann. Die Längs- und Höhenverstellung ist ferner wichtig für die Optimierung der Sicht des Fahrers auf die Anzeige-/Instrumententafel bzw. das Armaturenbrett des Fahrzeugs.

Die Längs- und Höhenverstellung von Lenksäulen kann unter Verwendung von jeweils mindestens einem elektrischen Stellmotor vorgenommen werden. Solche Lenksäulen werden als elektrisch verstellbare Lenksäulen bzw. EVLS bezeichnet.

Insbesondere für zukünftige, hochautomatisierte Kraftfahrzeuge, die sowohl manuell durch einen menschlichen Fahrer als auch autonom durch ein intelligentes Fahrsystem gesteuert bzw. gefahren werden können, sind elektrisch verstellbare Lenksäulen von großer Bedeutung. Um das Fahrzeug manuell steuern zu können, ist die Lenksäule in einen sogenannten Entstauzustand zu verbringen. Um das Fahrzeug autonom steuern zu lassen, kann die Lenksäule in einen sogenannten Verstauzustand verbracht werden. Insoweit werden solche elektrisch verstellbaren Lenksäulen auch als ver- und entstaubare Lenksäulen bezeichnet.

Der Entstauzustand einer ver- und entstaubaren, elektrisch verstellbaren Lenksäule entspricht der Situation einer konventionellen, elektrisch verstellbaren Lenksäule. Das heißt, die Lenksäule ist durch die Längs- und Höhenverstellung derart verstellt, dass die Lenkspindel und somit das Lenkrad innerhalb des Cockpits bzw. der Fahrerkabine bzw. der Fahrgastzelle zur Lenkbefehleingabe positioniert ist.

In dem Verstauzustand einer ver- und entstaubaren, elektrisch verstellbaren Lenksäule ist diese durch die Längs- und Höhenverstellung derart verstellt, dass die Lenkspindel und somit das Lenkrad außerhalb des Cockpits bzw. der Fahrerkabine bzw. der Fahrgastzelle, jedenfalls außerhalb der Reichweite des menschlichen Fahrers und innerhalb des Armaturenbretts oder innerhalb des Motorraums, positioniert ist. Durch das Verbringen der Lenksäule in das Armaturenbrett ist für den Fahrer zusätzlicher Raum in dem Cockpit bzw. der Fahrerkabine bzw. der Fahrgastzelle geschaffen. Dadurch hat der Fahrer die Möglichkeit, sich während der Fahrt anderen Beschäftigungen als das Steuern bzw. Fahren zu widmen. So könnte er seinen Sitz in eine bequeme Position zum Entspannen, in eine aufrechte Position zum Lesen, in eine horizontale Position zum Ruhen bzw. Schlafen verbringen. Ebenso könnte er seinen Sitz in das Fahrzeuginnere richten, um sich anderen Fahrzeuginsassen zuzuwenden.

Für einen zuverlässigen Betrieb von ver- und entstaubaren, elektrisch verstellbaren Lenksäulen ist es erforderlich, die Position bzw. räumliche Lage der Lenksäule in sämtlichen ihrer Verstellrichtungen zuverlässig zu erfassen.

Eine Lenksäule mit Positionserfassung ist aus der US 2018/0086378 A1 bekannt. Darin ist ein elektrischer Generator mit einer Eingangswelle und eine mit der Eingangswelle kinematisch gekoppelte Lenkspindel vorgeschlagen, wobei die Lenkspindel relativ zu dem elektrischen Generator beweglich ist. Der elektrische Generator wandelt die durch die Bewegung der Lenkspindel bewirkte kinetische Energie in elektrische Energie um, die einen Rückschluss auf die Position der Lenkspindel erlaubt.

Nachteilig an einer solchen Lenksäule ist der relativ aufwändige und dadurch wartungsintensive Aufbau. Da es sich dabei um eine relative Messmethode handelt, das heißt es wird die Änderung der Lenkspindelposition erfasst und anschließend auf einen vordefinierten Referenzwert bezogen, kann es außerdem in bestimmten Situationen zu verfälschten Messwerten kommen.

Weiter ist aus dem Stand der Technik bekannt, die Position der Lenkspindel mittels eines Hallsensors zu erfassen, indem sogenannte Hall-Counts gezählt werden, wobei aus der Anzahl der Hall-Counts ein Rückschluss auf die Änderung der Lenkspindelposition gezogen werden kann. Dabei handelt es sich um eine relative Messmethode. Problematisch daran ist, dass, wenn Hall-Counts - aus welchen Gründen auch immer - nicht gezählt werden, eine Position erfasst wird, die falsch ist oder derart von der realen Position abweicht, dass eine hinreichend genaue Ermittlung der Position nicht mehr möglich ist. Wenngleich die Auswirkung von Nichtzählungen einzelner weniger Hall-Counts auf die Messgenauigkeit mitunter vernachlässigbar sein kann, besteht die Gefahr eines Drifts der erfassten Lenkspindelposition weg von der tatsächlichen Lenkspindelposition, nämlich dass sich die Nichtzählungen einzelner Hall-Counts im Laufe der Betriebszeit aufsummieren.

Bekannt ist ferner aus der DE 10 2004 044 472 A1 eine verstellbare Lenksäule eines Kraftfahrzeugs mit einem Magnetsensorsystem zur Überwachung der Position der Lenksäule. Dabei ist ein erstes punktförmiges Element des Magnetsensorsystems ortsfest angebracht und ein damit zusammenwirkendes zweites Element des Magnetsensorsystems, das sich über den Verstellbereich am verstellbaren Teil der Lenksäule erstreckt, an der Stelleinheit angeordnet. Solange sich das punktförmige erste Element innerhalb des Bereichs des zweiten Elements befindet, wird ein Sensorsignal erzeugt, dass ein Verstellen innerhalb eines zulässigen Bereichs signalisiert. Die Enden des zweiten Elements stellen insofern Endanschläge dar.

Auch die DE 101 44 476 A1 offenbart eine elektromechanisch verstellbare Lenksäule. Die jeweilige Position der Lenksäule zur Auswertung einer Relativbewegung erfolgt über einen Geber, beispielsweise ein Potentiometer. Darüber hinaus sind Endtaster vorgesehen, die bei stillgesetztem Kraftfahrzeugmotor angefahren werden können, um eine Selbstjustierung durchzuführen.

Zudem ist aus der US 2016/0375927 A1 eine Lenksäule bekannt, die zwischen einer Verstauposition und einer Bedienposition verstellt werden kann. Dabei ist vorgesehen, dass ein Airbag unterschiedlich ausgelöst werden kann, was das Ausbreitungsvolumen des Airbags betrifft, abhängig davon, ob die Lenksäule in der Bedienposition oder in der Verstauposition ist.

Im Lichte der vorangehend erläuterten Nachteile der bekannten Lenksäulen liegt der vorliegenden Erfindung die Aufgabe zu Grunde, eine Lenksäule mit einer Positionserfassungseinrichtung zur Verfügung zu stellen, die einen einfachen und robusten Aufbau hat und deren Betrieb zuverlässig und sicher ist.

### Darstellung der Erfindung

Die der vorliegenden Erfindung zugrundeliegende Aufgabe wird gelöst durch eine Lenksäule für ein Kraftfahrzeug mit den Merkmalen des Anspruchs 1 sowie durch die jeweiligen Verfahren mit den Merkmalen der Ansprüche 8 und 14. Vorteilhafte Weiterbildungen ergeben sich aus den Unteransprüchen.

Es wird eine Lenksäule für ein Kraftfahrzeug vorgeschlagen, umfassend eine Stelleinheit, in der eine Lenkspindel drehbar gelagert ist und die von einer Trageinheit verstellbar gehalten ist, eine Verstelleinrichtung zum Verstellen der Stelleinheit gegenüber der Trageinheit sowie eine Positionserfassungseinrichtung, die eine erste Sensoreinheit zur Erfassung der Position der Stelleinheit gegenüber der Trageinheit umfasst.

Erfindungsgemäß umfasst die Positionserfassungseinrichtung eine zweite Sensoreinheit zur Erfassung eines Zustands, wenn die Stelleinheit in einer vorbestimmten Position relativ zur Trageinheit ist. Die vorbestimmte Position ist als ein Referenzwert einstellbar bzw. hinterlegbar. Dies kann beispielsweise im Rahmen der Montage der zweiten Sensoreinheit an der Lenksäule erfolgen. Der Referenzwert ist insbesondere bestimmbar durch eine Referenzfahrt der Lenkspindel zum Zweck der Datenerhebung an bzw. in die dem Referenzwert entsprechenden Verstellposition vor der bestimmungsgemäßen Inbetriebnahme der Lenksäule. Dabei ist die vorbestimmte Position eine von den durch die Endanschläge der Stelleinheit definierten Positionen abweichende Position.

Die Trageinheit kann an einer Fahrzeugkarosserie anbringbar sein. Außerdem kann an der Trageinheit eine Manteleinheit um eine Schwenkachse verschwenkbar befestigt sein. Die Stelleinheit kann in der Manteleinheit aufgenommen sein.

Die Lenksäule kann weiter eine Steuerungseinheit, auch als "electrical control unit" bzw. ECU bezeichnet, umfassen, die die Verstelleinrichtung ansteuert.

Die erste Sensoreinheit dient zur, insbesondere relativen, Erfassung der Position der Stelleinheit gegenüber der Trageinheit und somit zur, insbesondere relativen, Erfassung der Position der Lenkspindel gegenüber der Trageinheit. Die erste Sensoreinheit kann derart eingerichtet sein, ein erstes Sensorsignal, beispielsweise basierend auf Hall-Counts, zu erzeugen und an die Steuerungseinheit zu übermitteln.

Die Steuerungseinheit kann dazu ausgebildet sein, ein (Eingangs-)Signal oder mehrere (Eingangs-)Signale, insbesondere das erste Sensorsignal, zu empfangen, auszuwerten und daraufhin festlegbare Aktionen auszuführen, insbesondere ein (Ausgangs-)Signal oder mehrere (Ausgangs-)Signale zu erzeugen und an die Verstelleinrichtung zu übermitteln. Die zweite Sensoreinheit dient zur, insbesondere absoluten, Erfassung der vorbestimmten Position der Stelleinheit gegenüber der Trageinheit und somit zur, insbesondere absoluten, Erfassung der vorbestimmten Position der Lenkspindel gegenüber der Trageinheit.

Vorteilhafterweise ist die zweite Sensoreinheit derart ausgebildet, dass die vorbestimmte Position an beliebiger Position über den gesamten Verstellweg der Stelleinheit gegenüber der Trageinheit festgelegt werden kann. Insbesondere sind auch mehrere Positionen oder ein Positionsabschnitt als die vorbestimmte Position festlegbar. Die vorbestimmte Position liegt vorteilhafterweise in einem Bereich um eine mittlere Verstellposition der Stelleinheit gegenüber der Trageinheit. Insbesondere ist die vorbestimmte Position so festgelegt, dass ein Übergang von dem Verstaubereich in den Bedienbereich und umgekehrt zuverlässig erkannt werden kann.

Die zweite Sensoreinheit kann ein Sender- bzw. Gebermodul und ein Empfängermodul umfassen, wobei das Sendermodul und das Empfängermodul relativ zueinander bewegbar sind. Die zweite Sensoreinheit kann derart eingerichtet sein, ein zweites Sensorsignal, beispielsweise ein wertbinäres, wertdiskretes, wertquasikontinuierliches oder wertkontinuierliches Signal, zu erzeugen und an eine Steuerungseinheit zu übermitteln. Ein wertbinäres, zweites Sensorsignal kann die An- und Abwesenheit des Sendermoduls zu dem Empfängermodul, oder umgekehrt, repräsentieren. Ein wertbinäres, zweites Sensorsignal weist einen Sprung oder einen Impuls auf, sobald die relative Entfernung zwischen dem Sendermodul und dem Empfängermodul einen festgelegten Schwellwert erreicht oder unterschreitet oder überschreitet. Ein wertdiskretes, wertquasikontinuierliches oder wertkontinuierliches, zweites Sensorsignal kann den Abstand bzw. die Entfernung bzw. die Distanz zwischen dem Sendermodul und dem Empfängermodul repräsentieren. Das zweite Sensorsignal wird auch als Revisionssignal bezeichnet. Dieses Signal wird dann an die Steuerungseinheit ausgegeben bzw. von dieser erfasst, wenn die Stelleinheit sich in der vorbestimmten Position befindet.

Die Bezeichnung Sendermodul ist im Sinne der Erfindung nicht darauf beschränkt, dass dieses ein Signal aussendet. Beispielsweise kann das Sendermodul als Permanentmagnet oder als metallischer Körper ausgebildet sein.

Unter der vorbestimmten Position kann eine einzelne Position oder ein Positionsbereich verstanden werden.

Durch passende Positionierung des Sendermoduls zu dem Empfängermodul, die von Fahrzeug zu Fahrzeug aufgrund konstruktiver Unterschiede variieren kann, wird, bei zumindest einer bestimmten Verstellposition, insbesondere bei jedem Ver- und Entstauvorgang der Lenksäule, ein Stimulus in Form eines Sprungs oder eines Impulses im zweiten Sensorsignal erzeugt. Der Stimulus im zweiten Sensorsignal ist als ein Indikator bzw. ein auslösendes Ereignis nutzbar.

Während der Verstellung der Stelleinheit und der darin gelagerten Lenkspindel bewegen sich das Sendermodul und das Empfängermodul relativ zueinander. Das Sendermodul und das Empfängermodul sind derart zueinander positioniert, das heißt, jeweils an der Lenksäule angeordnet, dass sich die Module zumindest in einer bestimmten Verstellposition, die insbesondere von den Endpositionen abweichen, unmittelbar einander gegenüberliegen. In eben dieser Verstellposition erreicht oder unterschreitet oder überschreitet - je nach hinterlegter Abfrage bzw. Logik - die relative Entfernung zwischen dem Sendermodul und dem Empfängermodul einen zuvor festgelegten Schwellwert, sodass ein Stimulus in dem zweiten Sensorsignal erzeugt wird. Der Schwellwert ist vor der Inbetriebnahme festgelegt und kann als veränderbare Einstellung, beispielsweise der Steuerungseinheit, eintragbar sein oder als unveränderbare oder hartkodierte Einstellung, beispielsweise der Steuerungseinheit, eingetragen sein.

Durch die Positionserfassungseinrichtung der erfindungsgemäßen Lenksäule können Kollisionen der Lenksäule oder ihrer Bestandteile mit Verkleidungselementen innerhalb des Cockpits effektiv vermieden werden. Denn potentielle bzw. sich anbahnende Kollisionen sind frühzeitig erkennbar und sind durch Einleitung von Gegenmaßnahmen abwendbar.

Für die Fahrzeugsicherheit ist es wichtig, "unerlaubte" bzw. potentiell gefährliche Fahrzeugzustände frühzeitig zu erkennen. Die Positionserfassungseinrichtung der erfindungsgemäßen Lenksäule dient auch dazu, ein unbeabsichtigtes Verstauen während der manuellen Fahrt zu erkennen. Außerdem ist es wichtig, dass im Falle eines Unfalls bzw. im Crashfall das richtige Airbag-System ausgelöst wird. So vermag die Positionserfassungseinrichtung der erfindungsgemäßen Lenksäule aufgrund ihrer Fähigkeit, Zustände der Lenksäule voneinander zu unterscheiden, das richtige Airbag-System auszulösen, um den Fahrer optimal zu schützen. Beispielsweise kann in einem entstauten Zustand, in dem der Fahrer selbst das Fahrzeug führt, ein Airbag im Lenkrad in einem Crashfall gezündet werden, und in einem verstauten Zustand, in dem das Fahrzeug autonom gesteuert ist, kann in einem Crashfall der Airbag im Lenkrad ungezündet bleiben und ein Airbag in der Instrumententafel gezündet werden.

Die erste Sensoreinheit kann in der Verstelleinrichtung integriert sein oder außerhalb der Verstelleinrichtung angeordnet sein. Die erste Sensoreinheit kann so ausgebildet sein, dass sie die Verstellung fortwährend erfasst, das heißt während der gesamten Betriebszeit der Lenksäule oder zumindest während der gesamten Dauer des Verstellens.

Die Steuerungseinheit kann in der Manteleinheit integriert sein oder außerhalb der Manteleinheit angeordnet sein.

Die Steuerungseinheit kann derart ausgebildet sein, anhand des zweiten Sensorsignals, die Sensorwerte der ersten Sensoreinheit zu korrigieren. Im Konkreten können die Sensorwerte der ersten Sensoreinheit einem Vergleich mit einem Validierungswert unterzogen werden, sobald die räumliche Bedingung, die zur Erzeugung eines Stimulus im zweiten Sensorsignal führt, erfüllt ist. Der Validierungswert kann ein Sensorwert der zweiten, absolut arbeitenden Sensoreinheit, der bei Erfüllung der räumlichen Bedingung erfasst wird, oder ein vordefinierter Referenzwert sein.

Die Steuerungseinheit kann außerdem derart ausgebildet sein, anhand des zweiten Sensorsignals, verschiedene Teilsysteme des Kraftfahrzeugs anzusteuern, insbesondere zu aktivieren und zu deaktivieren. Dadurch ist eine Differenzierung von Zuständen der Lenksäule möglich und kann eine Schaltungslogik definiert werden, wonach bestimmte Teilsysteme des Fahrzeugs nur bei Erfüllung einer bestimmten räumlichen Bedingung aktiviert oder deaktiviert werden.

Beispielsweise können auf diese Weise verschiedene Airbag-Systeme aktiviert oder deaktiviert werden. Falls die Lenksäule in einem der möglichen Entstauzustände ist, um dem Fahrer das manuelle Steuern des Kraftfahrzeugs zu ermöglichen, ist notwendigerweise das Airbag-System in dem Lenkrad zu aktivieren und das Airbag-System in dem aus Fahrersicht hinter dem Lenkrad angeordneten Armaturenbrett zu deaktivieren, um den Fahrer optimal zu schützen.

Wenn hingegen die Lenksäule in einem der möglichen Verstauzustände ist, um dem Fahrer zusätzlichen Raum in der Fahrerkabine bzw. Fahrgastzelle zu seiner freien Verfügung während der autonomen Fahrt des Kraftfahrzeugs zu stellen, ist notwendigerweise das Airbag-System in dem Armaturenbrett zu aktivieren und das Airbag-System in dem verstauten Lenkrad zu deaktivieren, um den Fahrer optimal zu schützen.

Eine vorteilhafte Ausgestaltung ergibt sich, indem die erste Sensoreinheit und/oder die zweite Sensoreinheit berührungslos arbeitend, insbesondere magnetisch, induktiv, optisch oder dergleichen, ausgebildet sind bzw. ist. Mit anderen Worten: Die Sensoreinheiten sind derart ausgebildet, berührungslos zu arbeiten. Dies reduziert den mechanischen Verschleiß der Sensoreinheit und verbessert somit deren Haltbarkeit bzw. Langlebigkeit. Besonders bevorzugt sind magnetisch oder induktiv arbeitend ausgebildete Sensoreinheiten, da diese relativ wenig fehleranfällig sind und sich durch einen einfachen und robusten Aufbau auszeichnen.

Des Weiteren ist es von Vorteil, wenn die Sensoreinheiten jeweils dieselben Messprinzipien anwendend ausgebildet sind. Dadurch verringert sich die Komplexität der Lenksäule in Bezug auf die Herstellung, die Wartung und den Aufbau. Alternativ können die Sensoreinheiten aber auch unterschiedliche Messprinzipien anwendend ausgebildet sein. Auf diese Weise kann die Sicherheit erhöht werden und ein vollständiger Ausfall der Positionserfassungseinrichtung weitgehend reduziert werden.

Weiterhin kann die Positionserfassungseinrichtung eine dritte Sensoreinheit zur Erfassung eines zweiten Zustands, wenn die Stelleinheit in einer vorbestimmten zweiten Position relativ zur Trageinheit ist, umfassen. Die zweite Position ist eine andere als die Position der zweiten Sensoreinheit. Mit anderen Worten: Die zweite Position ist eine von der Position der zweiten Sensoreinheit abweichende Position. Die vorbestimmte zweite Position ist als ein Referenzwert einstellbar bzw. hinterlegbar. Der Referenzwert ist insbesondere bestimmbar durch eine Referenzfahrt der Lenkspindel zum Zweck der Datenerhebung an bzw. in die dem Referenzwert entsprechenden zweite Verstellposition vor der bestimmungsgemäßen Inbetriebnahme der Lenksäule. Dies kann beispielsweise bei der Montage der Lenksäule oder bei der Montage der Lenksäule im Kraftfahrzeug erfolgen.

Analog zur zweiten Sensoreinheit gilt: Die dritte Sensoreinheit dient zur, insbesondere absoluten, Erfassung der Position der Stelleinheit gegenüber der Trageinheit und somit zur, insbesondere absoluten, Erfassung der Position der Lenkspindel gegenüber der Trageinheit. Die dritte Sensoreinheit kann ein Sender- bzw. Gebermodul und ein Empfängermodul umfassen, wobei das Sendermodul und das Empfängermodul relativ zueinander bewegbar sind. Die dritte Sensoreinheit kann derart eingerichtet sein, ein drittes Sensorsignal, beispielsweise ein wertbinäres, wertdiskretes, wertquasikontinuierliches oder wertkontinuierliches Signal, zu erzeugen und an eine Steuerungseinheit zu übermitteln. Ein wertbinäres, drittes Sensorsignal kann die An- und Abwesenheit des Sendermoduls zu dem Empfängermodul, oder umgekehrt, repräsentieren. Ein wertbinäres, drittes Sensorsignal weist einen Sprung oder einen Impuls auf, sobald die relative Entfernung zwischen dem Sendermodul und dem Empfängermodul einen festgelegten Schwellwert erreicht oder unterschreitet oder überschreitet. Ein wertdiskretes, wertquasikontinuierliches oder wertkontinuierliches, drittes Sensorsignal kann den Abstand bzw. die Entfernung bzw. die Distanz zwischen dem Sendermodul und dem Empfängermodul repräsentieren. Das dritte Sensorsignal wird auch als zweites Revisionssignal oder bloß als Revisionssignal bezeichnet.

In einer vorteilhaften Weiterbildung kann das Empfängermodul als induktiver Sensor ausgebildet sein. Alternativ kann das Empfängermodul auch als Magnetschalter ausgebildet sein.

Die Begriffe Sendermodul und Gebermodul können alternativ zueinander verwendet werden. Das Sendermodul bzw. das Gebermodul kann als aktives oder passives Sendermodul ausgebildet sein. Das passive Sendermodul kann beispielsweise als Permanentmagnet oder als ferromagnetisches Element ausgebildet sein.

Weiterhin kann die Verstelleinrichtung eine Längsverstelleinrichtung und/oder eine Höhenverstelleinrichtung sein. Mit anderen Worten: Die Stelleinheit kann gegenüber der Trageinheit in eine Längsverstellrichtung und/oder eine Höhenverstellrichtung verstellbar sein. Eine Längs- und Höhenverstellung der Stelleinheit und der darin gelagerten Lenkspindel eignet sich dazu, eine ergonomische Anpassung der Lenkradposition relativ zu dem Fahrer zu erreichen.

Das Empfängermodul der zweiten Sensoreinheit und/oder der dritten Sensoreinheit kann in Bezug auf die Verstellrichtung der Positionserfassungseinrichtung ortsfest ausgestaltetet sein und das Sendermodul relativ zu dem Empfängermodul bewegbar ausgestaltet sein. So kann das Sendermodul an dem Empfängermodul vorbei bewegt werden. Alternativ kann das Sender- bzw. Gebermodul der zweiten Sensoreinheit und/oder der dritten Sensoreinheit in Bezug auf die Verstellrichtung der Positionserfassungseinrichtung ortsfest ausgestaltet sein und das Empfängermodul relativ zu dem Sendermodul bewegbar ausgestaltet sein. So kann das Empfängermodul an dem Sendermodul vorbei bewegt werden. In beiden Alternativen ist das eine Modul in Bezug auf die in Rede stehende Verstellrichtung feststehend, während das andere Modul entlang dieser Verstellrichtung beweglich bzw. verlagerbar ist. Mit anderen Worten erfolgt bei einer Verstellung in die entsprechende Verstellrichtung eine relative Verlagerung des Sendermoduls gegenüber dem Empfängermodul.

Ferner sind in vorteilhafter Weise das Sendermodul und das Empfängermodul derart zueinander positionierbar, dass die relative Entfernung zwischen dem Sendermodul und dem Empfängermodul bei jedem Ver- und Entstauen bzw. bei jedem Ver- und Entstauvorgang den festgelegten Schwellwert erreicht oder unterschreitet oder überschreitet.

In weiter vorteilhafter Weise können das Sendermodul und das Empfängermodul derart zueinander positioniert sein, dass die relative Entfernung zwischen dem Sendermodul und dem Empfängermodul möglichst klein bzw. gering ist. So ist es möglich, eine besonders gute Qualität des Revisionssignals zu erzeugen. Besonders bevorzugt ist der Abstand zwischen dem Sendermodul und dem Empfängermodul in der vorbestimmten Position minimal. Mit anderen Worten ist der Abstand zwischen dem Sendermodul und dem Empfängermodul in der vorbestimmten Position geringer als in jeder anderen Position, die die Stelleinheit gegenüber der Trageinheit einnehmen kann.

In erfindungsgemäßer Weise wird darüber hinaus ein Verfahren vorgeschlagen zum Verstellen der erfindungsgemäßen Lenksäule. Das Verfahren umfasst die Schritte Verstellen der Stelleinheit, insbesondere der Position der Stelleinheit, insbesondere der Position der Lenkspindel, gegenüber der Trageinheit mittels der Verstelleinrichtung, sodass die Lenkspindel der Lenksäule entlang der entsprechenden Verstellrichtung verstellt wird; Erfassen der Position der Stelleinheit durch die erste Sensoreinheit, insbesondere mittels einer relativen Messmethode; Erfassen eines Zustands durch die zweite Sensoreinheit, wenn die Stelleinheit in einer vorbestimmten Position relativ zur Trageinheit ist.

In vorteilhafter Weise weist das Verfahren folgende weitere Schritte auf: Vergleichen der durch die erste Sensoreinheit erfassten Position mit der vorbestimmten Position der Stelleinheit, wenn die zweite Sensoreinheit den Zustand erfasst; Detektieren einer Fehlfunktion einer der Sensoreinheiten, wenn die durch den Vergleich ermittelte Abweichung einen festgelegten Schwellwert überschreitet. Der Schwellwert kann vor der Inbetriebnahme festgelegt sein und kann als veränderbare Einstellung der Steuerungseinheit eintragbar sein oder als unveränderbare oder hartkodierte Einstellung der Steuerungseinheit eingetragen sein.

Durch die Detektion kann vermieden werden, dass ein falscher Sensorwert, das heißt, eine falsche Position, die als eine solche unerkannt bleibt, im Sinne eines "false positive" erfasst wird. Dies kann insbesondere bei systematischen Fehlern oder Driftfehlern über die Betriebszeit der Lenksäule der Fall sein. So kann die jeweilige Position der Lenkspindel sowohl in Längsverstellrichtung als auch in Höhenverstellrichtung zuverlässig erfasst werden.

In weiter vorteilhafter Weise weist das Verfahren folgende weitere Schritte auf: Erfassen eines zweiten Zustands durch eine dritte Sensoreinheit, wenn die Stelleinheit in der vorbestimmten zweiten Position relativ zur Trageinheit ist; Vergleichen der durch die erste Sensoreinheit erfassten Position mit der vorbestimmten zweiten Position der Stelleinheit, wenn die dritte Sensoreinheit den zweiten Zustand erfasst; Detektieren einer Fehlfunktion einer der Sensoreinheiten, wenn die durch den Vergleich ermittelte Abweichung einen festgelegten Schwellwert überschreitet. Durch die dritte Sensoreinheit ist es möglich das Ergebnis der zweiten Sensoreinheit zu überprüfen. Auf diese Weise ist eine Art von Redundanz geschaffen, die dazu führt, dass Fehlfunktionen der Sensoreinheiten zuverlässiger erkannt werden. Dies könnte bei einer Produktentwicklung gemäß ASIL-D-Klassifikation von Bedeutung sein.

Bevorzugter Weise weist das Verfahren folgenden weiteren Schritt auf: Korrigieren der Position der ersten Sensoreinheit, wenn die Fehlfunktion detektiert wird. Vorzugsweise wird dazu der Sensorwert der ersten Sensoreinheit durch den Sensorwert der zweiten Sensoreinheit, das heißt durch die entsprechende vorbekannte Position, ersetzt. Die vorbekannte Position ist ein Referenzwert, der durch eine Referenzfahrt der Lenkspindel zur Datenerhebung an bzw. in die dem Referenzwert entsprechenden Verstellposition vor der bestimmungsgemäßen Inbetriebnahme der Lenksäule bestimmbar ist. Alternativ kann der Referenzwert auch ein durch die zweite Sensoreinheit gemessene Position der Stelleinheit sein. Falsche Sensorwerte bzw. Positionen werden somit überschrieben. Die Korrektur der von dem wahren Sensor- bzw. Messwert abweichenden Sensorwerte der ersten Sensoreinheit stellt somit einen Beitrag zur Verbesserung der Zuverlässigkeit der Lenksäule dar.

In weiter bevorzugter Weise weist das Verfahren folgenden weiteren Schritt auf: Verlangsamen oder Anhalten bzw. Stoppen der Verstellung bzw. der Verstellbewegung der Stelleinheit gegenüber der Trageinheit. Dies kann beispielsweise dann erfolgen, wenn eine Abweichung zwischen der Position, die mittels der ersten Sensoreinheit bestimmt wurde, und der Position, die mittels der zweiten Sensoreinheit bestimmten wurde, eine vorbestimmte maximale Abweichung der Positionen zueinander überschritten worden ist. Es erfolgt somit ein Vergleich der beiden Positionen, die durch die Sensoreinheiten bestimmt wurden. Weichen diese zu stark voneinander ab, so erfolgt ein Verlangsamen bzw. ein Anhalten der Verstellung. Mit anderen Worten erfolgt das Verlangsamen und/oder das Anhalten der Verstellung dann, wenn die Stelleinheit in der vorbestimmten Position ist, und die durch die erste Sensoreinheit ermittelte Position derart von dieser vorbestimmten Position abweicht, dass die von den beiden Sensoreinheiten ermittelten Positionen eine vorbestimmte maximale Abweichung zueinander überschreitet. Besonders bevorzugt ist die maximal zulässige Abweichung größer als 0,5 mm, ganz besonders bevorzugt größer als 1 mm.

In vorteilhafter Weise umfasst der Verfahrensschritt des Vergleichens die Schritte Erfassen eines Sensorwerts durch die zweite Sensoreinheit oder dritte Sensoreinheit mittels einer absoluten Messmethode; Ermitteln der Abweichung zwischen dem aktuellen Sensorwert der ersten Sensoreinheit und dem Sensorwert der zweiten Sensoreinheit oder dritten Sensoreinheit. Dadurch ist eine Redundanz geschaffen, die die Zuverlässigkeit der Lenksäule weiter steigert.

Alternativ dazu umfasst der Verfahrensschritt des Vergleichens die Schritte Ermitteln der Abweichung zwischen dem aktuellen Sensorwert der ersten Sensoreinheit und einem festgelegten Referenzsensorwert der zweiten Sensoreinheit oder dritten Sensoreinheit; Speichern des Referenzwerts als der Sensorwert der zweiten Sensoreinheit oder dritten Sensoreinheit. Der Referenzwert ist durch eine Referenzfahrt der Lenkspindel zur Datenerhebung an bzw. in die dem Referenzwert entsprechenden Verstellposition vor der bestimmungsgemäßen Inbetriebnahme der Lenksäule bestimmbar. Dadurch erübrigt sich eine explizite Erfassung eines Sensorwerts durch die zweite Sensoreinheit, sodass sich der Aufbau weiter vereinfacht.

Des Weiteren wird in erfindungsgemäßer Weise ein Verfahren vorgeschlagen zur Ansteuerung, insbesondere zur Aktivierung und Deaktivierung, von Teilsystemen eines Kraftfahrzeugs, insbesondere Airbag-Systeme, mit der erfindungsgemäßen Lenksäule. Das Verfahren umfasst die Schritte Verstellen der Stelleinheit, insbesondere der Position der Lenkspindel der Lenksäule, gegenüber der Trageinheit mittels der Verstelleinrichtung; Erzeugen eines Zustandssignals der Lenksäule in Abhängigkeit von der Verstellung der Stelleinheit, insbesondere der Position der Lenkspindel, während des Verstellens, wobei das Revisionssignal ein Umschalt-, Sprung-, bzw. Stufensignal oder ein Impuls- bzw. Stoßsignal ist; Erkennen eines ersten Zustands der Lenksäule, wenn das Zustandssignal einen ersten Wert annimmt oder unterschreitet oder überschreitet, oder Erkennen zumindest eines weiteren Zustands der Lenksäule, wenn das Zustandssignal zumindest einen weiteren Wert annimmt oder unterschreitet oder überschreitet. Alternativ kann dieser Schritt ausgeprägt sein durch Erkennen eines ersten Zustands der Lenksäule, bevor das Zustandssignal einen Impuls aufweist, oder Erkennen zumindest eines weiteren Zustands, nachdem das Zustandssignal zumindest einen Impuls aufweist; Ansteuern des dem erkannten Zustand gemäß einer Festlegung entsprechenden Teilsystems.

Die Festlegung entspricht einer Zuweisung, aus der ableitbar ist, welches Teilsystem in welchem erkannten Zustand anzusteuern ist. Die Festlegung ist vor der Inbetriebnahme definiert und kann als veränderbare Einstellung der Steuerungseinheit eintragbar sein oder als unveränderbare oder hartkodierte Einstellung der Steuerungseinheit eingetragen sein.

So kann der Fahrer sowohl in einem Entstauzustand als auch in einem Verstauzustand durch die ausgewählten Airbag-Systeme optimal geschützt werden. Die Auswahl, das heißt, die gezielte Aktivierung und Deaktivierung, einzelner Airbag-Systeme aus einer Vielzahl verschiedener Airbag-Systeme, die in der die Fahrgastzelle umgebenden Fahrzeugstruktur angeordnet bzw. verbaut sind, ist abhängig von dem jeweiligen Lenksäulenzustand, das heißt, ist abhängig davon, ob die Lenkspindel ver- oder entstaut ist.

### Beschreibung der Zeichnung

Vorteilhafte Ausführungsformen der Erfindung sind im Folgenden anhand der Zeichnung näher erläutert. Im Einzelnen zeigen
- Figur 1: eine Ausführungsform der erfindungsgemäßen Lenksäule in einer perspektivischen Darstellung,
- Figur 2: die Lenksäule aus Figur 1 in einer perspektivischen Detaildarstellung,
- Figur 3: die Lenksäule aus Figur 1 in einer Seitenansicht,
- Figur 4: die Lenksäule aus Figur 1 in einer Seitenansicht,
- Figur 5: die Lenksäule aus Figur 1 in einer Seitenansicht,
- Figur 6: die Lenksäule aus Figur 1 in einer Seitenansicht,
- Figur 7: die Lenksäule aus Figur 1 in einer stark vereinfachten, schematischen Seitenansicht mit einem Diagramm möglicher Signale, und
- Figur 8: eine alternative Ausführungsform der erfindungsgemäßen Lenksäule in einer perspektivischen Darstellung.

### Ausführungsformen der Erfindung

In den verschiedenen Figuren sind gleiche Teile stets mit den gleichen Bezugszeichen versehen und sind daher in der Regel jeweils nur einmal benannt bzw. erwähnt.

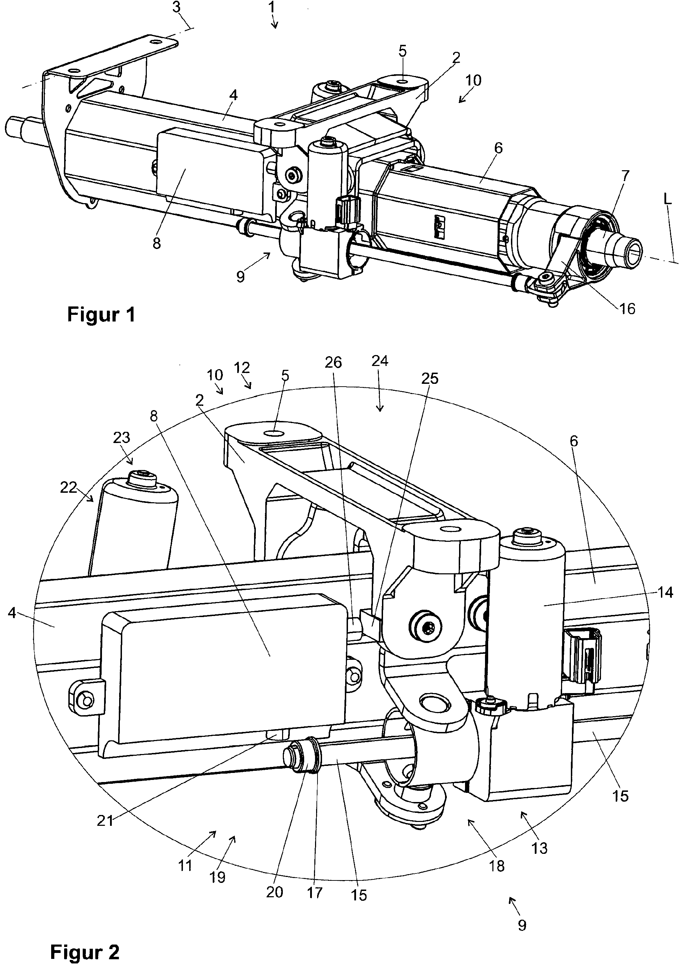

Figur 1 zeigt eine Ausführungsform der erfindungsgemäßen Lenksäule 1 in einer perspektivischen Darstellung von schräg hinten in Fahrzeugfahrtrichtung.

Die Lenksäule 1 umfasst eine Trageinheit 2 und eine daran um eine Schwenkachse 3 verschwenkbar befestigte Manteleinheit 4. Die Lenksäule 1 ist über die Trageinheit 2 an einer in den Figuren nicht dargestellten Fahrzeugkarosserie anbringbar. Zu diesem Zweck weist die als zweiteilige Konsole ausgebildete Trageinheit 2 Durchgangsöffnungen 5 zur Aufnahme von in den Figuren ebenfalls nicht dargestellten Befestigungsmitteln auf. Die Trageinheit 2 dient zur verschwenkbaren Aufhängung der Manteleinheit 4 an der Fahrzeugkarosserie.

Eine Stelleinheit 6 ist in der Manteleinheit 4 aufgenommen. Die Stelleinheit 6 ist beweglich mit der Manteleinheit 4 verbunden, das heißt, die Stelleinheit 6 ist teleskopartig gegenüber der Manteleinheit 4 verlagerbar, indem sie in die Manteleinheit 4 einschiebbar und aus der Manteleinheit 4 herausziehbar ist. Die Stelleinheit 6 ist als Rohrkörper ausgebildet. Der Rohrkörper der Stelleinheit 6 ist an dem dem Fahrer abgewandten Ende in der Manteleinheit 4 koaxial angeordnet, nämlich darin axial verschiebbar gelagert.

Die Stelleinheit 6 umfasst eine Lenkspindel 7. Die Lenkspindel 7 ist drehbar in der Stelleinheit 6 gelagert. Somit ist die Lenkspindel 7 auch drehbar in der Manteleinheit 4 gelagert, da die Stelleinheit 6 in der Manteleinheit 4 aufgenommen ist. Somit ist die Lenkspindel 7 unter Zwischenschaltung der Stelleinheit 6 in der Manteleinheit 4 gelagert.

Es ist ebenfalls denkbar und möglich, dass die Lenkspindel 7 direkt in der Manteleinheit 4 gelagert ist. Das dem Fahrer zugewandte Ende der Lenkspindel 7 (Figur 1, rechtsseitig), welches als lenkradseitiges Ende bezeichnet wird, weist eine in den Figuren nicht dargestellte Außenverzahnung zur Aufnahme einer in den Figuren ebenfalls nicht dargestellten innenverzahnten Nabe eines Lenkrads auf. Alternativ zur Außenverzahnung bzw. Innenverzahnung können auch andere Formschlussprofile zum Einsatz kommen, um die Lenkspindel 7 mit dem Lenkrad drehmomentenschlüssig zu koppeln.

Des Weiteren umfasst die Lenksäule 1 eine Steuerungseinheit 8 zur Auswertung eines Revisionssignals. Die Steuerungseinheit 8 ist fest mit der Manteleinheit 3 verschraubt.

Weiterhin umfasst die Lenksäule 1 eine als Längsverstelleinrichtung ausgebildete Verstelleinrichtung 9 zur Längsverstellung der Lenkspindel 7, nämlich zum translatorischen Bewegen der Stelleinheit 6 und somit der Lenkspindel 7 entlang der Verstellrichtung der Verstelleinrichtung 9, nämlich entlang der Lenkspindelachse L, relativ zu der Trageinheit 2 und relativ zur Manteleinheit 4. Mit anderen Worten: Aus Fahrersicht handelt es sich dabei um eine Verstellung der Lenkradposition in Richtung "vor bzw. zurück".

Darüber hinaus umfasst die Lenksäule 1 eine als Höhenverstelleinrichtung ausgebildete Verstelleinrichtung 10 zur Höhenverstellung der Lenkspindel 7, nämlich zum Verschwenken der Manteleinheit 4 gemeinsam mit der Stelleinheit 6 und somit der Lenkspindel 7 entlang der Verstellrichtung der Verstelleinrichtung 10, nämlich um die Schwenkachse 3, relativ zu der Trageinheit 2. Aus Fahrersicht handelt es sich dabei um eine Verstellung der Lenkradposition in Richtung "aufwärts bzw. abwärts".

Figur 2 zeigt die Lenksäule 1 aus Figur 1 in einer perspektivischen Detaildarstellung von schräg vorne in Fahrzeugfahrtrichtung.

Die Lenksäule 1 umfasst ferner eine Positionserfassungseinrichtung 11 und eine Positionserfassungseinrichtung 12. Die Positionserfassungseinrichtung 11 ist der als Längsverstelleinrichtung ausgebildeten Verstelleinrichtung 9 zugeordnet und dient zum Erfassen der Position der Lenkspindel 7 entlang der Verstellrichtung der Verstelleinrichtung 9, nämlich entlang der Längsrichtung der Lenksäule 1. Die Positionserfassungseinrichtung 12 ist der als Höhenverstelleinrichtung ausgebildeten Verstelleinrichtung 10 zugeordnet und dient zum Erfassen der Position der Lenkspindel 7 entlang der Verstellrichtung der Verstelleinrichtung 10, nämlich entlang der Höhenrichtung der Lenksäule 1.

Die als Längsverstelleinrichtung ausgebildete Verstelleinrichtung 9 weist einen Verstellantrieb 13 auf. Der Verstellantrieb 13 umfasst einen elektrischen Stellmotor bzw. Elektromotor 14, eine Spindelmutter mit Innengewinde und eine Gewindespindel 15 mit Außengewinde, wobei die Spindelmutter und die Gewindespindel 15 miteinander im Gewindeeingriff stehen. Der Verstellantrieb 13 treibt die Spindelmutter rotatorisch um ihre Drehachse an. Durch den Gewindeeingriff der Spindelmutter und der Gewindespindel 15 bewirkt die Rotation der Spindelmutter eine Translation der Gewindespindel 15 entlang ihrer Längsachse. Es handelt sich bei der Gewindespindel 15 somit um eine Tauchspindel. Die Längsachse der Gewindespindel 15 verläuft parallel zu der Lenkspindelachse L. Die Gewindespindel 15 ist an ihrem dem Fahrer zugewandten Ende über einen Anlenkhebel 16 (Figur 1) mit der Stelleinheit 6 verbunden, sodass eine Translation der Gewindespindel 15 eine Translation bzw. eine axiale Verschiebung der Stelleinheit 6 entlang der Lenkspindelachse L bewirkt.

An dem dem Fahrer abgewandten Ende der Gewindespindel 15 ist ein Endanschlag 17 angeordnet. Der Endanschlag 17 dient als mechanischer Stopp bzw. (End-)Anschlag für die Bewegung der Gewindespindel 15 entlang ihrer Längsachse.

Die Positionserfassungseinrichtung 11 umfasst eine erste Sensoreinheit 18 und eine zweite Sensoreinheit 19.

Die erste Sensoreinheit 18 ist in den Verstellantrieb 13 integriert. Die translatorische Bewegung der Gewindespindel 15 entlang ihrer Längsachse entspricht aufgrund der über den Anlenkhebel 16 verwirklichten kinematischen Verbindung der translatorischen Bewegung der Lenkspindel 7 entlang der Lenkspindelachse L. Die erste Sensoreinheit 18 erfasst die Längsverstellung der Lenkspindel 7 mittels einer relativen bzw. inkrementellen Messmethode. Das bedeutet, die erste Sensoreinheit 18 erfasst die Änderung einer Messgröße, nämlich die Längenänderung bzw. die Änderung der Längsverstellung der Lenkspindel 7. Die erfasste Messgrößenänderung wird anschließend auf einen bekannten Referenzwert bezogen, um den Sensorwert zu ermitteln. Der Sensorwert der ersten Sensoreinheit 18 entspricht diesem Referenzwert unter entsprechender Berücksichtigung der erfassten Messgrößenänderung. Die erste Sensoreinheit 18 erfasst die Längsverstellung der Lenkspindel 7 fortwährend, das heißt während der gesamten Betriebszeit der Lenksäule oder zumindest während der gesamten Dauer des Verstellens.

Die zweite Sensoreinheit 19 erfasst die Längsverstellung der Lenkspindel 7 mittels einer absoluten Messmethode. Das heißt, die zweite Sensoreinheit 19 erfasst eine Messgröße als solche, nämlich die Position oder Positionsbereich bzw. die Länge bzw. die Längsverstellung der Lenkspindel 7. Eine Bezugnahme auf einen Referenzwert ist nicht erforderlich und findet nicht statt. Vielmehr entspricht der Sensorwert der zweiten Sensoreinheit 19 unmittelbar der erfassten Messgröße. Die von der zweiten Sensoreinheit 19 erfasste Position der Lenkspindel 7 kann vorteilhafterweise beliebig über dem gesamten Verstellbereich der Lenkspindel 7 liegen. Insbesondere wird die Position der Lenkspindel dort erfasst, wo ein Übergang von dem Verstaubereich zu dem Bedienbereich bzw. ein Übergang von dem Bedienbereich zu dem Verstaubereich erfolgt. Hierdurch wird das Ansteuern und Auslösen desjenigen Airbags mit der für einen Fahrer bestmöglichen Schutzwirkung verbessert.

Die zweite Sensoreinheit 19 weist ein Sender-/Gebermodul 20 und ein Empfängermodul 21 auf. Das Sendermodul 20 und das Empfängermodul 21 sind relativ zueinander bewegbar. Das Empfängermodul 21 ist in Bezug auf die Verstellrichtung der Positionserfassungseinrichtung 11 ortsfest mit der Steuerungseinheit 8 verbunden, wohingegen das Sendermodul 20 mit dem dem Fahrer abgewandten Ende der Gewindespindel 15 verbunden ist. Das Sendermodul 20 ist relativ zu dem ortsfesten Empfängermodul 21 bewegbar, da die Gewindespindel 15 durch den Verstellantrieb 13 axial entlang ihrer Längsachse verschiebbar ist.

Die zweite Sensoreinheit 19 erfasst die Längsverstellung der Lenkspindel 7 genau dann, wenn die räumliche Entfernung zwischen dem Sendermodul 20 und dem Empfängermodul 21 den festgelegten Schwellwert unterschreitet. Somit erfasst die zweite Sensoreinheit 19 die Längsverstellung der Lenkspindel 7, sobald die Lenkspindel 7 die Mittelstellung entweder einnimmt oder durchfährt.

Die als Höhenverstelleinrichtung ausgebildete Verstelleinrichtung 10 weist einen Verstellantrieb 22 auf. Der Verstellantrieb 22 bewirkt eine Verschwenkung der Manteleinheit 4 um die Schwenkachse 3 (Figur 1) und bewirkt somit die Höhenverstellung der Lenksäule 1.

In analoger Weise zu der Positionserfassungseinrichtung 11 umfasst die Positionserfassungseinrichtung 12 eine erste Sensoreinheit 23 und eine zweite Sensoreinheit 24.

Die erste Sensoreinheit 23 ist in den Verstellantrieb 22 integriert. Sie erfasst die Höhenverstellung der Lenkspindel 7 mittels einer relativen bzw. inkrementellen Messmethode. Die erste Sensoreinheit 23 erfasst die Höhenverstellung der Lenkspindel 7 fortwährend, das heißt während der gesamten Betriebszeit. In Bezug auf die erste Sensoreinheit 23 und deren relative Messmethode sowie deren fortwährende Erfassung gelten die voranstehenden Ausführungen zu der die Längsverstellung erfassenden ersten Sensoreinheit 18 analog.

Die zweite Sensoreinheit 24 erfasst die Höhenverstellung der Lenkspindel 7 mittels einer absoluten Messmethode. Die zweite Sensoreinheit 24 weist ein Sender-/Gebermodul 25 und ein Empfängermodul 26 auf. Das Sendermodul 25 und das Empfängermodul 26 sind relativ zueinander bewegbar. Das Sendermodul 25 ist in Bezug auf die Verstellrichtung der Positionserfassungseinrichtung 12 ortsfest mit der Trageinheit 2 verbunden. Das Empfängermodul 26 ist relativ zu dem ortsfesten Sendermodul 25 bewegbar, da das Empfängermodul 26 fest mit der Steuerungseinheit 8 verbunden ist und die Steuerungseinheit 8 fest mit der Manteleinheit 4 verbunden ist, wobei die Manteleinheit 4 durch die Verstelleinrichtung 10 um die Schwenkachse 3 relativ zu der Trageinheit 2 verschwenkbar ist.

Das Sendermodul 25 und das Empfängermodul 26 der zweiten Sensoreinheit 24 der Verstelleinrichtung 10 sind derart zueinander angeordnet, dass, wenn die Lenkspindel 7 in Bezug auf die Höhenverstellung in ihrer Mittelstellung - Position zwischen einer minimalen und einer maximalen Verstellposition - ist oder diese durchfährt, sich die Module 25, 26 unmittelbar gegenüberliegen. In dieser Verstellposition der Lenkspindel 7 unterschreitet der räumliche Abstand bzw. die räumliche Entfernung, das heißt, die relative Entfernung, zwischen dem Sendermodul 25 und dem Empfängermodul 26 einen zuvor festgelegten bzw. vordefinierten Schwellwert. Auch in dieser Stelle sei noch einmal darauf hingewiesen, dass das Sendermodul 25 nicht darauf beschränkt ist, dass dieses aktiv ein Signal aussendet. Dieses Sendermodul 25 kann beispielsweise durch einen Dauermagneten oder aus einem ferromagnetischen Element gebildet sein. Beispielsweise ist es auch denkbar und möglich, dass das Sendermodul 25 und die Trageinheit 2 als ein einstückig integrales Bauteil gebildet sind.

Die zweite Sensoreinheit 24 erfasst die Höhenverstellung der Lenkspindel 7 genau dann, wenn die räumliche Entfernung zwischen dem Sendermodul 25 und dem Empfängermodul 26 den festgelegten Schwellwert unterschreitet. Somit erfasst die zweite Sensoreinheit 24 die Höhenverstellung der Lenkspindel 7, sobald die Lenkspindel 7 die Mittelstellung entweder einnimmt oder durchfährt. Die Mittelstellung entspricht somit einer vorbestimmten Position zwischen der minimalen und der maximalen Verstellposition.

In Bezug auf die zweite Sensoreinheit 24 und deren absolute Messmethode sowie deren bedingter Erfassung gelten die voranstehenden Ausführungen zu der die Längsverstellung erfassenden zweiten Sensoreinheit 19 analog.

Die Steuerungseinheit 8 ist derart ausgebildet, anhand des Revisionssignals, die Sensorwerte der ersten Sensoreinheit 18, 23 zu korrigieren. Sie ist außerdem derart ausgebildet, anhand des Revisionssignals, verschiedene Airbag-Systeme des Kraftfahrzeugs situationsabhängig zu aktivieren und zu deaktivieren.

Die erste Sensoreinheit 18 der Positionserfassungseinrichtung 11, die zweite Sensoreinheit 19 der Positionserfassungseinrichtung 11, die erste Sensoreinheit 23 der Positionserfassungseinrichtung 12 und die zweite Sensoreinheit 24 der Positionserfassungseinrichtung 12 sind jeweils als magnetische Sensoren ausgebildet.

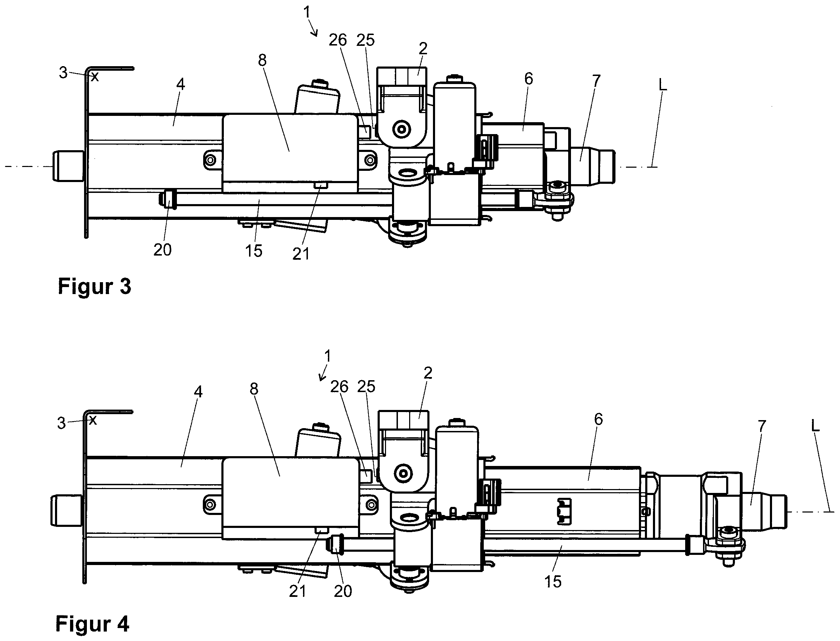

Figur 3 zeigt die Lenksäule 1 aus Figur 1 in einer Seitenansicht. Die Lenkspindel 7 ist in Bezug auf die Längsverstellung vollständig eingefahren. In diesem Zustand ist die Länge der Lenksäule 1 - gemessen von dem dem Fahrer zugewandten Ende der Lenksäule 1 entlang der Lenkspindelachse L bis zu dem dem Fahrer abgewandten Ende der Lenksäule 1 - auf ihr Minimum reduziert. Dieser Zustand könnte einem Verstauzustand der Lenksäule 1 entsprechen, in welchem die Lenksäule 1 aus Sicht des Fahrers in Richtung des Armaturenbretts "verstaut" ist, das heißt verbracht bzw. hineinteleskopiert ist.

Während die Lenksäule 1 in ihrem Verstauzustand ist, könnte das Kraftfahrzeug autonom gesteuert werden. Der Fahrer hätte in dem Verstauzustand der Lenksäule 1 zusätzlichen Raum in der Fahrerkabine bzw. Fahrgastzelle
zu seiner freien Verfügung. Der durch das Verstauen der Lenksäule 1 gewonnene zusätzliche Raum könnte beispielsweise genutzt werden, um den Sitz des Fahrers in eine horizontale Position zu verbringen, um dem Fahrer zu ermöglichen, während der autonomen Fahrt des Kraftfahrzeugs zu ruhen.

In Bezug auf die Höhenverstellung ist die Lenkspindel 7 in ihrer Mittelstellung. Das heißt, die Lenkspindel 7 und somit die Lenksäule 1 ist in ihrer Höhenverstellrichtung in der mittigen Position zwischen einer höchsten und einer tiefsten Verstellposition. In der Mittelposition in Höhenverstellrichtung liegen sich das Sendermodul 25 und das Empfängermodul 26 unmittelbar gegenüber, das heißt, sind auf gleicher Höhe.

Figur 4 zeigt die Lenksäule 1 aus Figur 1 in einer Seitenansicht. Im Vergleich zu der in Figur 3 dargestellten Verstellposition ist die Lenkspindel 7 in Richtung der Längsverstellung in einer von der Mittelposition geringfügig herausgefahrenen Verstellposition. Dieser Zustand könnte einem möglichen "Entstauzustand" der Lenksäule 1 entsprechen, in welchem die Lenksäule 1 aus Sicht des Fahrers heraus "entstaut", das heißt, verbracht bzw. herausteleskopiert ist. Wie in Figur 3 ist die Lenkspindel 7 in Bezug auf die Höhenverstellung in ihrer Mittelstellung.

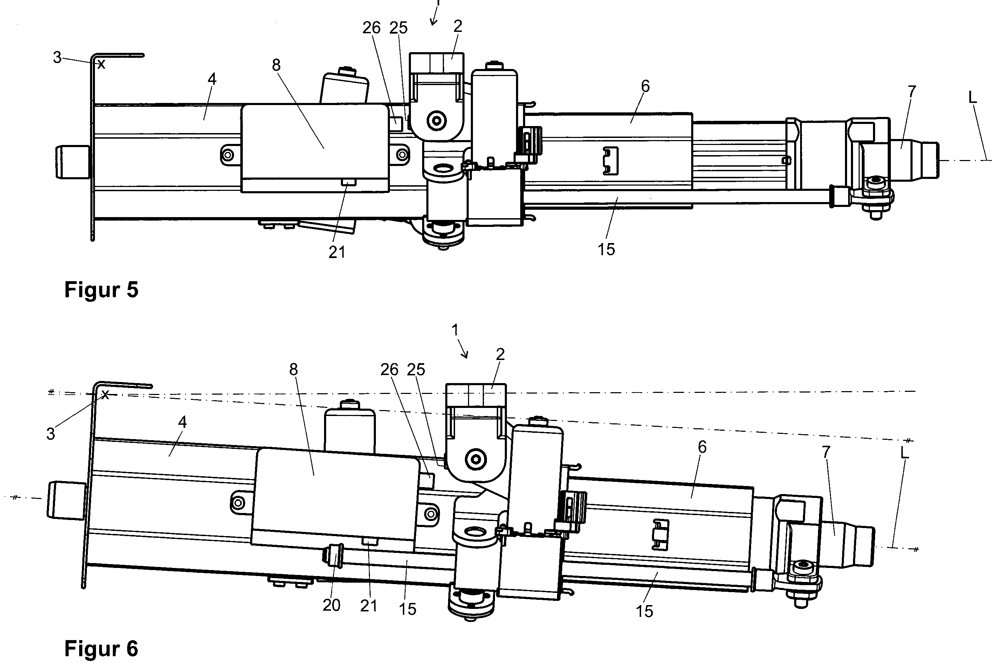

Figur 5 zeigt die Lenksäule 1 aus Figur 1 in einer Seitenansicht. Die Lenkspindel 7 ist in Bezug auf die Längsverstellung vollständig ausgefahren. Das dem Fahrer abgewandte Ende der Gewindespindel 15 und somit das Sendermodul 20 der zweiten Sensoreinheit 19 der Positionserfassungseinrichtung 11 sind in dieser Ansicht nicht sichtbar. Der an dem dem Fahrer abgewandten Ende der Gewindespindel 15 angeordnete Endanschlag stößt gegen eine Gegenfläche des Verstellantriebs 13 oder steht zumindest kurz vor einer solchen Flächenberührung. In diesem Zustand ist die Länge der Lenksäule 1 auf ihr Maximum vergrößert. Dieser Zustand könnte dem größtmöglichen Entstauzustand der Lenksäule 1 entsprechen und wird auch als vollständig ausgefahrener Zustand bezeichnet.

In einem Entstauzustand der Lenksäule 1 kann der Fahrer durch Drehen des Lenkrads Lenkbefehle für das Kraftfahrzeug komfortabel eingeben. Während die Lenksäule 1 in einem ihrer Entstauzustände ist, könnte das Kraftfahrzeug somit manuell durch den Fahrer gesteuert werden. Wie in Figur 3 ist die Lenksäule 1 in Bezug auf die Höhenverstellung in ihrer Mittelstellung.

Figur 6 zeigt die Lenksäule 1 aus Figur 1 in einer Seitenansicht. Die Lenksäule 1 ist in Richtung der Längsverstellung in einer von der Mittelposition geringfügig eingefahrenen Verstellposition.

In Bezug auf die Höhenverstellung ist die Lenksäule 1 in einer unteren Stellung. Das heißt, die Lenksäule 1 ist in ihrer Höhenverstellrichtung in einer unteren Verstellposition.

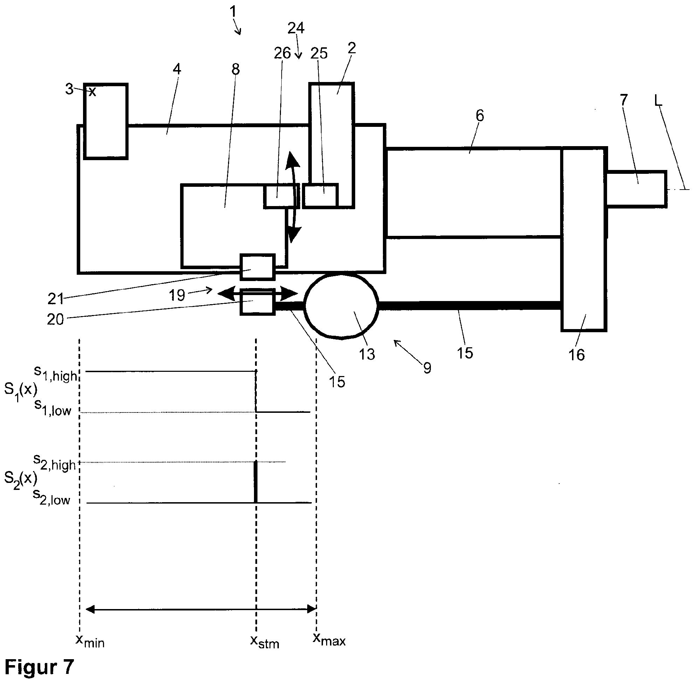

Figur 7, oben, zeigt die Lenksäule 1 aus Figur 1 in einer stark vereinfachten, schematischen Seitenansicht. Wie voranstehend ausgeführt, umfasst die Lenksäule 1 die Trageinheit 2, die an der Trageinheit 2 um die Schwenkachse 3 verschwenkbar befestigte Manteleinheit 4, die Steuerungseinheit 8, und die Verstelleinrichtung 9. In der Manteleinheit 3 ist die entlang der Lenkspindelachse L teleskopierbare Stelleinheit 6 gelagert. In der Stelleinheit 6 ist die Lenkspindel 7 drehbar gelagert.

Die Lenksäule 1 ist in Längsverstellrichtung in ihrer Mittelstellung. Das Sendermodul 20 und das Empfängermodul 21 der zweiten Sensoreinheit 19 der der Verstelleinrichtung 9 zugeordneten Positionserfassungseinrichtung 11 sind zueinander derart angeordnet, dass sie sich in der Mittelstellung unmittelbar gegenüberliegen, sodass der Abstand zwischen dem Sendermodul 20 und dem Empfängermodul 21 einen festgelegten Schwellwert unterschreitet. Das Empfängermodul 21 ist fest mit der Steuerungseinheit 8 verbunden und somit in Längsverstellrichtung ortsfest. Das Sendermodul 20 ist an dem dem Fahrer abgewandten Ende der entlang ihrer Längsachse verschiebbaren Gewindespindel 15 angeordnet. Somit ist - wie durch den horizontalen, parallel zur Lenkspindelachse verlaufenden, doppelspitzigen Pfeil angedeutet - das Sendermodul 20 relativ zu dem fixierten Empfängermodul 21 verschiebbar.

Die Lenksäule 1 ist auch in Höhenverstellrichtung in ihrer Mittelstellung. Das Sendermodul 25 und das Empfängermodul 26 der zweiten Sensoreinheit 24 der der Verstelleinrichtung 10 zugeordneten Positionserfassungseinrichtung 12 sind zueinander derart angeordnet, dass sie sich in der Mittelstellung unmittelbar gegenüberliegen, sodass der Abstand zwischen den beiden Modulen 25, 26 einen festgelegten Schwellwert unterschreitet. Das Sendermodul 25 ist fest mit der Trageinheit 2 verbunden und somit in Höhenverstellrichtung ortsfest.

Das Empfängermodul 26 ist an der Steuerungseinheit 8 befestigt. Die Steuerungseinheit 8 wiederum ist fest mit der verschwenkbaren Manteleinheit 4 verbunden. Somit ist - wie durch den vertikal gebogenen, nahezu senkrecht zur Lenkspindelachse verlaufenden, doppelspitzigen Pfeil angedeutet - das Empfängermodul 26 relativ zu dem fixierten Sendermodul 25 verschwenkbar.

Figur 7, unten, zeigt ein Diagramm mit zwei möglichen Ausführungsformen eines Signals, nämlich eines Revisionssignals oder Zustandssignals. Das Signal S*₁(x)* stellt einen Signalwert s*₁* über den Hub bzw. Verstellweg *xₘᵢₙ≤×≤xₘₐₓ* der Gewindespindel 15 und somit der Lenkspindel 7 in Längsverstellrichtung von der vollständig eingefahrenen Längsverstellung *xₘᵢₙ* (minimale Verstellposition der Lenkspindel 7) bis zu der vollständig ausgefahrenen Längsverstellung *xₘₐₓ* (maximale Verstellposition der Lenkspindel 7) dar. Der Signalwert s*₁* repräsentiert verschiedene Zustände, die die Lenksäule 1 während des Verstellens einnehmen kann. In dieser Ausführungsform nimmt der Signalwert s*₁* zwei verschiedene Werte an, und zwar s*_{1,low}* und s_{*1*,*high*}, wobei s*_{1,low}*<s*_{1,high}* gilt. Im Allgemeinen kann der Signalwert s*₁* hingegen weitere Werte annehmen. Die Längsverstellung x*ₛₜₘ* bezeichnet die relative Positionierung des Sendermoduls 20 zu dem Empfängermodul 21 genau dann, wenn die relative Entfernung zwischen dem Sendermodul 20 und dem Empfängermodul 21 während des Verstellens den zuvor festgelegten Schwellwert unterschreitet und infolgedessen ein Stimulus im Signal erzeugt wird. Der Stimulus, das heißt die Information, dass der Abstand zwischen dem Sendermodul 20 und dem Empfängermodul 21 den zuvor festgelegten Schwellwert während des Verstellens unterschritten hat, ist als ein Sprung im Signal moduliert. Das Signal S*₁(x)* ist demnach ein Umschalt-, Sprung-, bzw. Stufensignal.

Das Signal S*₂(x)* stellt in analoger Weise einen alternativen Signalwert s*₂* über den Verstellweg *xₘᵢₙ≤x≤xₘₐₓ* in Längsverstellrichtung dar. Im Unterschied zu dem vorgenannten Signal ist das Signal S*₂(x)* ein Impuls- bzw. Stoßsignal. Daher ist der Stimulus, das heißt die Information, dass der Abstand zwischen dem Sendermodul 20 und dem Empfängermodul 21 den zuvor festgelegten Schwellwert während des Verstellens unterschritten hat, als ein Stoß im Signal moduliert.

Der besseren Übersicht halber ist das Diagramm (Figur 7, unten) gegenüber der schematischen Seitenansicht (Figur 7, oben) seitlich so ausgerichtet, dass die Verstellpositionen *xₘᵢₙ*, *xₛₜₘ* und *xₘₐₓ* jeweils zutreffend unterhalb der entsprechenden Positionen des Sendermoduls 20 platziert sind.

Der Stimulus und damit die Differenzierung von Zuständen der Lenksäule 1 ermöglicht es, abhängig von dem jeweiligen Zustand, verschiedene Teilsysteme des Kraftfahrzeugs anzusteuern.

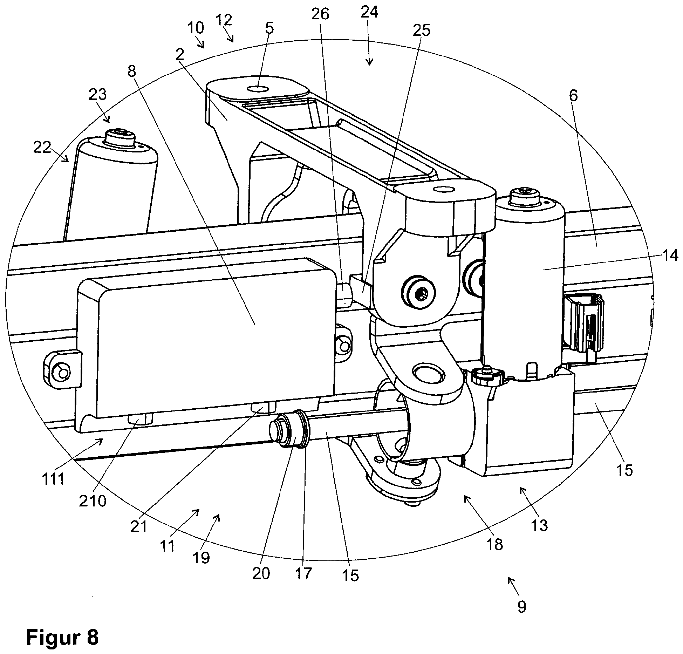

Figur 8 zeigt eine Lenksäule 1 in einer alternativen Ausführungsform, wobei diese im Gegensatz zu der Lenksäule der ersten Ausführungsform der Figuren 1 bis 7 eine Positionserfassungseinrichtung 11 mit einer zusätzlichen dritten Sensoreinheit 111 aufweist.

Die erste Sensoreinheit 18 ist in den Verstellantrieb 13 integriert. Die translatorische Bewegung der Gewindespindel 15 entlang ihrer Längsachse entspricht aufgrund der über den Anlenkhebel 16 verwirklichten kinematischen Verbindung der translatorischen Bewegung der Lenkspindel 7 entlang der Lenkspindelachse L. Die erste Sensoreinheit 18 erfasst die Längsverstellung der Lenkspindel 7 mittels einer relativen bzw. inkrementellen Messmethode. Das bedeutet, die erste Sensoreinheit 18 erfasst die Änderung einer Messgröße, nämlich die Längenänderung bzw. die Änderung der Längsverstellung der Lenkspindel 7. Die erfasste Messgrößenänderung wird anschließend auf einen bekannten Referenzwert bezogen, um den Sensorwert zu ermitteln. Der Sensorwert der ersten Sensoreinheit 18 entspricht diesem Referenzwert unter entsprechender Berücksichtigung der erfassten Messgrößenänderung. Die erste Sensoreinheit 18 erfasst die Längsverstellung der Lenkspindel 7 fortwährend, das heißt während der gesamten Betriebszeit der Lenksäule oder zumindest während der gesamten Dauer des Verstellens.

Die zweite Sensoreinheit 19 erfasst die Längsverstellung der Lenkspindel 7 mittels einer absoluten Messmethode. Das heißt, die zweite Sensoreinheit 19 erfasst eine Messgröße als solche, nämlich die erste vorbestimmte Position bzw. die Länge bzw. die Längsverstellung der Lenkspindel 7. Eine Bezugnahme auf einen Referenzwert ist nicht erforderlich und findet nicht statt. Vielmehr entspricht der Sensorwert der zweiten Sensoreinheit 19 unmittelbar der erfassten Messgröße.

Die dritte Sensoreinheit 111 erfasst die Längsverstellung der Lenkspindel 7 mittels einer absoluten Messmethode. Das heißt, die dritte Sensoreinheit 19 erfasst eine Messgröße als solche, nämlich die zweite vorbestimmte Position bzw. die Länge bzw. die Längsverstellung der Lenkspindel 7. Dabei ist die zweite vorbestimmte Position gegenüber der ersten vorbestimmten Position beabstandet. Die dritte Sensoreinheit 111 umfasst ein Empfängermodul 210 und ein Sendermodul, welches auch als Gebermodul bezeichnet werden kann, und das identisch mit dem Sendermodul 20 der zweiten Sensoreinheit 19 ist. Die dritte Sensoreinheit 111 ist im Aufbau und in der Wirkweise identisch mit der zweiten Sensoreinheit 19, bis auf die Position in der diese angeordnet ist.

### Bezugszeichenliste

- 1: Lenksäule
- 2: Trageinheit
- 3: Schwenkachse
- 4: Manteleinheit
- 5: Durchgangsöffnungen
- 6: Stelleinheit
- 7: Lenkspindel
- 8: Steuerungseinheit
- 9: Verstelleinrichtung
- 10: Verstelleinrichtung
- 11: Positionserfassungseinrichtung
- 12: Positionserfassungseinrichtung
- 13: Verstellantrieb
- 14: Elektromotor
- 15: Gewindespindel
- 16: Anlenkhebel
- 17: Endanschlag
- 18: Erste Sensoreinheit
- 19: Zweite Sensoreinheit
- 20: Sendermodul
- 21: Empfängermodul
- 22: Verstellantrieb
- 23: Erste Sensoreinheit
- 24: Zweite Sensoreinheit
- 25: Sendermodul
- 26: Empfängermodul
- 111: Dritte Sensoreinheit
- 210: Empfängermodul
- L: Lenkspindelachse

## Patentansprüche

1. Lenksäule (1) für ein Kraftfahrzeug, umfassend eine Stelleinheit (6), in der eine Lenkspindel (7) drehbar gelagert ist und die von einer Trageinheit (2) zwischen einem Bedienbereich und einem Verstaubereich verstellbar gehalten ist, eine Verstelleinrichtung (9, 10) zum Verstellen der Stelleinheit (6) gegenüber der Trageinheit (2) sowie eine Positionserfassungseinrichtung (11, 12), die eine erste Sensoreinheit (18, 23) zur Erfassung der Position der Stelleinheit (6) gegenüber der Trageinheit (2) umfasst, **dadurch gekennzeichnet, dass** die Positionserfassungseinrichtung (11, 12) eine zweite Sensoreinheit (19, 24) zur Erfassung eines Zustands, wenn die Stelleinheit (6) in einer vorbestimmten Position relativ zur Trageinheit (2) ist, umfasst, wobei die vorbestimmte Position eine von durch Endanschläge der Stelleinheit (6) definierte Positionen abweichende Position ist.

2. Lenksäule (1) nach Anspruch 1, **dadurch gekennzeichnet, dass** die erste Sensoreinheit (18, 23) berührungslos arbeitend ausgeführt ist.

3. Lenksäule (1) nach einem der vorgenannten Ansprüche, **dadurch gekennzeichnet, dass** die zweite Sensoreinheit (19, 24) berührungslos arbeitend ausgeführt ist.

4. Lenksäule (1) nach einem der vorgenannten Ansprüche, **dadurch gekennzeichnet, dass** die Sensoreinheiten (18, 19, 23, 24) jeweils dieselben Messprinzipien anwendend ausgebildet sind.

5. Lenksäule (1) nach einem der Ansprüche 1 bis 3, **dadurch gekennzeichnet, dass** die Sensoreinheiten (18, 19, 23, 24) jeweils unterschiedliche Messprinzipien anwendend ausgebildet sind.

6. Lenksäule (1) nach einem der vorgenannten Ansprüche, **dadurch gekennzeichnet, dass** die Positionserfassungseinrichtung (11, 12) eine dritte Sensoreinheit zur Erfassung eines zweiten Zustands, wenn die Stelleinheit (6) in einer vorbestimmten zweiten Position relativ zur Trageinheit (2) ist, umfasst.

7. Lenksäule (1) nach einem der vorgenannten Ansprüche, **dadurch gekennzeichnet, dass** die Stelleinheit (6) gegenüber der Trageinheit (2) in eine Längsverstellrichtung und/oder eine Höhenverstellrichtung verstellbar ist.

8. Verfahren zum Verstellen einer Lenksäule (1) nach einem der Ansprüche 1 bis 7, umfassend folgende Schritte:
- Verstellen der Stelleinheit (6) gegenüber der Trageinheit (2) mittels der Verstelleinrichtung (9, 10);
- Erfassen der Position der Stelleinheit (6) durch die erste Sensoreinheit (18, 23);
- Erfassen eines Zustands durch die zweite Sensoreinheit (19, 24), wenn die Stelleinheit (6) in einer vorbestimmten Position relativ zur Trageinheit (2) ist.

9. Verfahren nach Anspruch 8, **dadurch gekennzeichnet, dass** das Verfahren folgende weitere Schritte aufweist:
- Vergleichen der durch die erste Sensoreinheit (18, 23) erfassten Position mit der vorbestimmten Position der Stelleinheit (6), wenn die zweite Sensoreinheit (19, 24) den Zustand erfasst;
- Detektieren einer Fehlfunktion einer der Sensoreinheiten (18, 19, 23, 24), wenn die durch den Vergleich ermittelte Abweichung einen festgelegten Schwellwert überschreitet.

10. Verfahren nach einem der Ansprüche 8 oder 9, **dadurch gekennzeichnet, dass** das Verfahren folgende weitere Schritte aufweist:
- Erfassen eines zweiten Zustands durch eine dritte Sensoreinheit, wenn die Stelleinheit (6) in der vorbestimmten zweiten Position relativ zur Trageinheit (2) ist;
- Vergleichen der durch die erste Sensoreinheit (18, 23) erfassten Position mit der vorbestimmten zweiten Position der Stelleinheit (6), wenn die dritte Sensoreinheit den zweiten Zustand erfasst;
- Detektieren einer Fehlfunktion einer der Sensoreinheiten (18, 19, 23, 24), wenn die durch den Vergleich ermittelte Abweichung einen festgelegten Schwellwert überschreitet.

11. Verfahren nach einem der Ansprüche 9 oder 10, **dadurch gekennzeichnet, dass** das Verfahren folgenden weiteren Schritt aufweist:
- Korrigieren der Position der ersten Sensoreinheit (18, 23), wenn die Fehlfunktion detektiert wird.

12. Verfahren nach einem der Ansprüche 9 bis 11, **dadurch gekennzeichnet, dass** das Verfahren folgenden weiteren Schritt aufweist:
- Verlangsamen der Verstellung der Stelleinheit (6) gegenüber der Trageinheit (2).

13. Verfahren nach einem der Ansprüche 9 bis 12, **dadurch gekennzeichnet, dass** das Verfahren folgenden weiteren Schritt aufweist:
- Anhalten der Verstellung der Stelleinheit (6) gegenüber der Trageinheit (2).

14. Verfahren zur Ansteuerung von Teilsystemen eines Kraftfahrzeugs mit einer Lenksäule (1) nach einem der Ansprüche 1 bis 7, umfassend folgende Schritte:
- Verstellen der Stelleinheit (6) gegenüber der Trageinheit (2) mittels der Verstelleinrichtung (9, 10);
- Erzeugen eines Zustandssignals der Lenksäule (1) in Abhängigkeit von der Position der Stelleinheit (6) während des Verstellens, wobei das Zustandssignal ein Umschalt-, Sprung-, bzw. Stufensignal oder ein Impuls- bzw. Stoßsignal ist;
- Erkennen eines ersten Zustands der Lenksäule (1), wenn das Zustandssignal einen ersten Wert annimmt oder unterschreitet oder überschreitet, oder Erkennen zumindest eines weiteren Zustands der Lenksäule (1), wenn das Zustandssignal zumindest einen weiteren Wert annimmt oder unterschreitet oder überschreitet oder
Erkennen eines ersten Zustands der Lenksäule (1), bevor das Zustandssignal einen Impuls aufweist, oder Erkennen zumindest eines weiteren Zustands, nachdem das Zustandssignal zumindest einen Impuls aufweist;
- Ansteuern des dem erkannten Zustand gemäß einer Festlegung entsprechenden Teilsystems.

## Claims

1. A steering column (1) for a motor vehicle, comprising an actuating unit (6) in which a steering spindle (7) is rotatably mounted and which is held in an adjustable manner between an operator control area and a stowed area by a supporting unit (2), an adjustment device (9, 10) for adjusting the actuating unit (6) with respect to the supporting unit (2), and a position-sensing device (11, 12) which comprises a first sensor unit (18, 23) for sensing the position of the actuating unit (6) with respect to the supporting unit (2), **characterized in that** the position-sensing device (11, 12) comprises a second sensor unit (19, 24) for sensing a state when the actuating unit (6) is in a predetermined position relative to the supporting unit (2), wherein the predetermined position is a position which differs from the positions defined by the end stops of the actuating unit (6).

2. The steering column (1) as claimed in claim 1, **characterized in that** the first sensor unit (18, 23) is designed to operate in a contactless manner.

3. The steering column (1) as claimed in one of the preceding claims, **characterized in that** the second sensor unit (19, 24) is designed to operate in a contactless manner.

4. The steering column (1) as claimed in one of the preceding claims, **characterized in that** the sensor units (18, 19, 23, 24) are each designed to use the same measurement principles.

5. The steering column (1) as claimed in one of claims 1 to 3, **characterized in that** the sensor units (18, 19, 23, 24) are each designed to use different measurement principles.

6. The steering column (1) as claimed in one of the preceding claims, **characterized in that** the position-sensing device (11, 12) comprises a third sensor unit for sensing a second state when the actuating unit (6) is in a predetermined second position relative to the supporting unit (2).

7. The steering column (1) as claimed in one of the preceding claims, **characterized in that** the actuating unit (6) can be adjusted with respect to the supporting unit (2) in a longitudinal adjustment direction and/or a height adjustment direction.

8. A method for adjusting a steering column (1) as claimed in one of claims 1 to 7, comprising the following steps:
- adjusting the actuating unit (6) with respect to the supporting unit (2) by means of the adjustment device (9, 10);
- sensing the position of the actuating unit (6) by means of the first sensor unit (18, 23);
- sensing a state by means of the second sensor unit (19, 24) when the actuating unit (6) is in a predetermined position relative to the supporting unit (2).

9. The method as claimed in claim 8, **characterized in that** the method has the following further steps:
- comparing the position sensed by the first sensor unit (18, 23) with the predetermined position of the actuating unit (6) when the second sensor unit (19, 24) senses the state;
- detecting a malfunction of one of the sensor units (18, 19, 23, 24) if the discrepancy determined by the comparison exceeds a stipulated threshold value.

10. The method as claimed in either of claims 8 and 9, **characterized in that** the method has the following further steps:
- sensing a second state by means of a third sensor unit when the actuating unit (6) is in the predetermined second position relative to the supporting unit (2);
- comparing the position sensed by the first sensor unit (18, 23) with the predetermined second position of the actuating unit (6) when the third sensor unit captures the second state;
- detecting a malfunction of one of the sensor units (18, 19, 23, 24) if the discrepancy determined by the comparison exceeds a stipulated threshold value.

11. The method as claimed in either of claims 9 and 10, **characterized in that** the method has the following further step:
- correcting the position of the first sensor unit (18, 23) if the malfunction is detected.

12. The method as claimed in one of claims 9 to 11, **characterized in that** the method has the following further step:
- slowing down the adjustment of the actuating unit (6) with respect to the supporting unit (2).

13. The method as claimed in one of claims 9 to 12, **characterized in that** the method has the following further step:
- stopping the adjustment of the actuating unit (6) with respect to the supporting unit (2).

14. A method for controlling subsystems of a motor vehicle having a steering column (1) as claimed in one of claims 1 to 7, comprising the following steps:
- adjusting the actuating unit (6) with respect to the supporting unit (2) by means of the adjustment device (9, 10);
- generating a state signal of the steering column (1) on the basis of the position of the actuating unit (6) during adjustment, wherein the state signal is a changeover, step or pulse signal;
- detecting a first state of the steering column (1) if the state signal assumes or falls below or exceeds a first value, or detecting at least one further state of the steering column (1) if the state signal assumes or falls below or exceeds at least one further value or
detecting a first state of the steering column (1) before the state signal has a pulse, or detecting at least one further state after the state signal has at least one pulse;
- controlling the subsystem, which corresponds to the detected state according to a stipulation.

## Revendications

1. Colonne de direction (1) pour un véhicule automobile, comprenant une unité d'actionnement (6) dans laquelle une tige de direction (7) est montée rotative et qui est maintenue de manière réglable entre une zone de commande de l'opérateur et une zone de rangement par une unité de support (2), un dispositif de réglage (9, 10) pour régler l'unité d'actionnement (6) par rapport à l'unité de support (2), et un dispositif de détection de position (11, 12) qui comprend une première unité de capteur (18, 23) pour détecter la position de l'unité d'actionnement (6) par rapport à l'unité de support (2), **caractérisée en ce que** le dispositif de détection de position (11, 12) comprend une deuxième unité de capteur (19, 24) pour détecter un état lorsque l'unité d'actionnement (6) est dans une position prédéterminée par rapport à l'unité de support (2), dans laquelle la position prédéterminée est une position qui diffère des positions définies par les butées de fin de course de l'unité d'actionnement (6).

2. Colonne de direction (1) selon la revendication 1, **caractérisée en ce que** le premier capteur (18, 23) est conçu pour fonctionner sans contact.

3. Colonne de direction (1) selon l'une des revendications précédentes, **caractérisée en ce que** le deuxième capteur (19, 24) est conçu pour fonctionner sans contact.

4. Colonne de direction (1) selon l'une des revendications précédentes, **caractérisée en ce que** les unités de capteurs (18, 19, 23, 24) sont conçues pour utiliser les mêmes principes de mesure.

5. Colonne de direction (1) selon l'une des revendications 1 à 3, **caractérisée en ce que** les unités de capteurs (18, 19, 23, 24) sont chacune conçues pour utiliser des principes de mesure différents.

6. Colonne de direction (1) selon l'une des revendications précédentes, **caractérisée en ce que** le dispositif de détection de position (11, 12) comprend une troisième unité de détection pour détecter un deuxième état lorsque l'unité d'actionnement (6) est dans une deuxième position prédéterminée par rapport à l'unité de support (2).

7. Colonne de direction (1) selon l'une des revendications précédentes, **caractérisée en ce que** l'unité d'actionnement (6) peut être réglée par rapport à l'unité de support (2) dans une direction de réglage longitudinal et/ou une direction de réglage en hauteur.

8. Procédé de réglage d'une colonne de direction (1) selon l'une des revendications 1 à 7, comprenant les étapes suivantes:
- régler l'unité d'actionnement (6) par rapport à l'unité de support (2) au moyen du dispositif de réglage (9, 10);
- détection de la position de l'unité d'actionnement (6) au moyen de la première unité de détection (18, 23);
- la détection d'un état au moyen de la deuxième unité de détection (19, 24) lorsque l'unité d'actionnement (6) est dans une position prédéterminée par rapport à l'unité de support (2).

9. Procédé selon la revendication 8, **caractérisé en ce que** la méthode comporte les étapes suivantes:
- comparer la position détectée par la première unité de détection (18, 23) avec la position prédéterminée de l'unité d'actionnement (6) lorsque la deuxième unité de détection (19, 24) détecte l'état;
- la détection d'un dysfonctionnement de l'une des unités de détection (18, 19, 23, 24) si l'écart déterminé par la comparaison dépasse une valeur seuil stipulée.

10. Procédé selon l'une des revendications 8 et 9, **caractérisé en ce que** la méthode comporte les étapes suivantes:
- détecter un deuxième état au moyen d'un troisième capteur lorsque l'unité d'actionnement (6) se trouve dans la deuxième position prédéterminée par rapport à l'unité de support (2);
- comparer la position détectée par la première unité de détection (18, 23) avec la deuxième position prédéterminée de l'unité d'actionnement (6) lorsque la troisième unité de détection capture le deuxième état;
- la détection d'un dysfonctionnement de l'une des unités de détection (18, 19, 23, 24) si l'écart déterminé par la comparaison dépasse une valeur seuil stipulée.

11. Procédé selon l'une des revendications 9 et 10, **caractérisé en ce que** la méthode comporte l'étape suivante:
- corriger la position de la première unité de détection (18, 23) si le dysfonctionnement est détecté.

12. Procédé selon l'une des revendications 9 à 11, **caractérisé en ce que** le procédé comporte l'étape suivante:
- ralentir le réglage de l'unité d'actionnement (6) par rapport à l'unité de support (2).

13. Procédé selon l'une des revendications 9 à 12, **caractérisé en ce que** le procédé comporte l'étape suivante:
- arrêter le réglage de l'unité d'actionnement (6) par rapport à l'unité de support (2).

14. Procédé de commande de sous-systèmes d'un véhicule automobile doté d'une colonne de direction (1) selon l'une des revendications 1 à 7, comprenant les étapes suivantes:
- régler l'unité d'actionnement (6) par rapport à l'unité de support (2) au moyen du dispositif de réglage (9, 10);
- générer un signal d'état de la colonne de direction (1) sur la base de la position de l'unité d'actionnement (6) pendant le réglage, le signal d'état étant un signal de commutation, de pas ou d'impulsion;
- détection d'un premier état de la colonne de direction (1) si le signal d'état est inférieur ou supérieur à une première valeur, ou détection d'au moins un autre état de la colonne de direction (1) si le signal d'état est inférieur ou supérieur à au moins une autre valeur, ou détection d'un premier état de la colonne de direction (1) avant que le signal d'état ne comporte une impulsion, ou détection d'au moins un autre état après que le signal d'état comporte au moins une impulsion;
- contrôler le sous-système qui correspond à l'état détecté conformément à une stipulation.
